# EUROPEAN PATENT SPECIFICATION

(11) **EP 4 426 958 B1**
(45) Date of publication and mention of the grant of the patent: **14.01.2026**
(21) Application number: 22817343.1
(22) Date of filing: 03.11.2022
(51) Int. Cl.: F16H 1/16, B62M 6/55

(54) **REDUCTION GEAR UNIT AND GEARMOTOR UNIT FOR PEDAL-ASSISTED BICYCLE**
UNTERSETZUNGSGETRIEBE UND GETRIEBEMOTOREINHEIT FÜR PEDALUNTERSTÜTZTES FAHRRAD
ENSEMBLE ENGRENAGE DE RÉDUCTION ET ENSEMBLE MOTEUR À ENGRENAGES POUR BICYCLETTE À ASSISTANCE À PÉDALES

(30) Priority: 04.11.2021 IT 202100028133
(43) Date of publication of application: 11.09.2024
(73) Proprietor: Bi. Mecc. S.n.c. Di Biagini & Ori, 42122 Reggio Emilia (IT)
(72) Inventor: MANZINI, Andrea, 42122 Reggio Emilia (IT); BIAGINI, Mauro, 42122 Reggio Emilia (IT)
(74) Representative: Rossi, Ugo
(86) International application number: PCT/IB2022/060585
(87) International publication number: WO 2023/079471

(56) References cited:
- WO-A1-2009/079901
- US-A- 4 648 286
- US-A- 5 915 493
- US-A1- 2018 281 897

## Description

### Technical field

The present invention relates to a reducer assembly, a gearmotor unit and a torque sensor for a bicycle. In particular, the present invention relates to a reducer assembly, a gearmotor unit and a pedal-assisted bicycle.

However, it should be noted that the reducer assembly, the gearmotor unit and the torque sensor according to the present invention are applicable to any system (not only means of transportation) which envisages the transmission of motion between two shafts and the measurement of torque.

The present invention relates to a pedal-assisted bicycle.

It should be specified that, in this context, a pedal-assisted bicycle is intended as any vehicle with one (unicycle), two, three (tricycle) or more wheels (quadricycle, rickshaw, etc.) which is both driven by human muscle force, and is provided with at least one electric auxiliary motor.

### Prior art

As is known, a pedal-assisted bicycle or "e-bike" is a conventional bicycle to which at least one electric motor, one or more batteries and a series of sensors are applied which detect, instant by instant, the rotation speed of the pedal cranks/pedals assembly. The rotation speed detected is coded by a processing unit which, based on predefined parameters, calibrates the additional support provided by the electric motor to the muscle action provided by the cyclist.

To date, pedal-assisted bicycles use brushless or DC electric motors coupled to various types of reducers, which drive the shaft on which the pedal cranks/pedals assembly rotates, usually coaxial to the cranks.

Problems related to this type of gearmotors are generally due to size, weight and operating temperatures.

The transmissions often have multiple stages of reduction and are sometimes coupled to electromagnetic clutches which, operating inside the same casings in which the reducer is arranged, lead to overheating the entire gearmotor unit and therefore losses in efficiency.

Furthermore, the non-negligible dimensions of the transmission constrain the assembly, and thus the positioning, of the electric motor on the bicycle frame.

Finally, since the overall efficiencies of these electric motors do not exceed 0.7, the electric motor must necessarily be oversized to achieve the necessary power. In fact, during intense use, the electric motor tends to heat up and, having no way of cooling down, requires an intervention of the processing unit which consists of a decrease in the current dispensed and, consequently, in the general performance of the electric motor.

Another possible problem of the current gearmotor units for pedal-assisted bicycles is due to the fact that, in the event of non-use, the electric motor remains connected to the shaft on which the pedal cranks/pedals assembly rotates.

Consequently, during normal or unassisted pedalling, the cyclist may also be forced to drag the electric motor with the relative transmission.

Generally these types of gearmotors have planetary reducers or gears parallel with the free wheels and the torque meter (if present) parallel and/or coaxial to the pedal cranks shaft.

The longitudinal axis of the electric motor of these bicycles of known type are in most cases parallel to the rotation axis of the pedal cranks and parallel to the longitudinal axis of the reducer. This feature makes the motor width important, as the reduction gear cascade is parallel to the rotation shaft axis of the motor.

In the state of the art, bicycles exist which are provided with an electric motor with the purpose of helping the user while pedalling.

Generally, such pedal-assisted bicycle technology comprises an electric motor, a rechargeable battery and an electronic management system, by means of which the auxiliary torque input provided by the electric motor is managed. Thereby, the latter provides an auxiliary torque to the cyclist during pedalling in order to lighten the physical effort.

According to the prior art, bicycles exist which are provided with a more advanced electronic management system comprising an apparatus for detecting the torque exerted by the user on the pedal shaft in a bicycle transmission.

Measuring and monitoring the value of the torque generated on the pedal shaft generally allows to optimise the intervention of the electric motor during pedalling. In fact, the electronic management system provided on the electric bicycles processes the information received from the apparatus which detects the torque generated on the pedal shaft and activates/deactivates or partialises the work of the electric motor according to the needs.

Therefore, while pedalling, the cyclist will benefit from the intervention of the electric motor which will in part replace the user, reducing their physical effort; as soon as the pedalling load is reduced, the apparatus which detects the new motor torque value sends the information to the management system which will also make the torque dispensed by the electric motor decrease. Simultaneously with the intervention of the electric motor on the bicycle transmission, the user must take charge of managing the transmission ratio active on the transmission itself.

According to the prior art, the apparatus measuring the motor torque value comprises a motor torque sensor.

In order to allow the detection of the torque dispensed and the rotation speed of the rotation shaft of the pedal cranks, the use of pedalling torque sensors (e.g., torque meters) is known.

Typically, the torque sensors of the known type comprise a Hall sensor, an encoder or the like for detecting the rotation speed and/or for determining the angular position thereof.

It is also known to determine the torque value (without resorting to specific sensors) indirectly, for example by measuring the current absorbed by the motor.

Such types of sensors often require high costs and production times, also shifting the final cost of the electric bicycle from a given type of market. Furthermore, such torque sensors can be quite complicated in terms of assembly, tuning (calibration) and maintenance during the life of use of the transmission. The document WO 2009/079901 A1 discloses a reduction gear unit for a bicycle, in accordance with the preamble of claim 1.

### Object of the invention

In this context, the technical task underlying the present invention is to propose a reduction gear unit which obviates the drawbacks in the prior art as described above.

Another object of the present invention is to provide a reduction gear unit in which all the sliding frictions are transformed into rolling frictions, with a considerable increase in the efficiencies.

Another object of the present invention is to allow a reduction of the chain pull, isolating the effects of the transmission on the rear suspension.

Another object of the present invention is to provide a torque sensor which allows to improve the measurement of the transmitted torque in terms of precision.

Another object of the invention is to provide reduction gear unit for bicycles which allows to reduce the overall dimensions of the torque sensor on the bicycle transmission so as to obtain a more compact mechanical transmission member.

Another object of the present invention is to provide a reduction gear unit which is simple to use and reliable.

A further object of the present invention is to make a reduction gear unit with affordable costs.

The technical task set and the objects specified are substantially attained by a reduction gear unit comprising the technical features as set out in one or more of the appended claims.

The present invention describes a reducer assembly, particularly for a pedal-assisted bicycle, according to what is described in the appended claim 1.

Other advantageous aspects of the reduction gear unit are described in dependent claims 2 to 9**.**

The present invention describes a gearmotor unit, according to what is described in claims 10 and 11.

The present invention describes a pedal-assisted bicycle according to what is described in the appended claim 12**.**

Other advantageous aspects of the bicycle are described in the dependent claims 13 and 14.

The present invention also relates to a pedalling torque sensor configured to detect the torque applied by a cyclist to the pedals assembly and to generate a signal representative thereof. The torque sensor according to the present invention comprises:
- a piston constrained on a second free wheel and movable following the force impressed on the pedal cranks/pedals assembly of a bicycle; and
- a transducer configured to convert the movement of the piston into a first electrical signal so that said electrical signal is proportionate to the force impressed on the pedal cranks/pedals assembly.

Advantageously, the piston is movable to contrast a plurality of Belleville washers.

### Brief description of the drawings

For a better understanding of the invention and to appreciate the advantages thereof, some non-limiting example embodiments thereof are described herein below, referring to the appended drawings, in which:

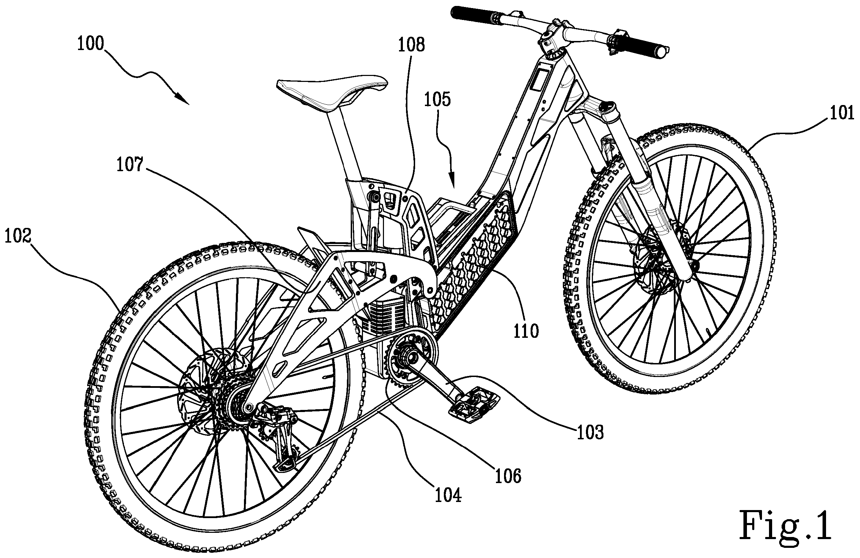

- figure 1 is a schematic illustration of a pedal-assisted bicycle according to the present invention;

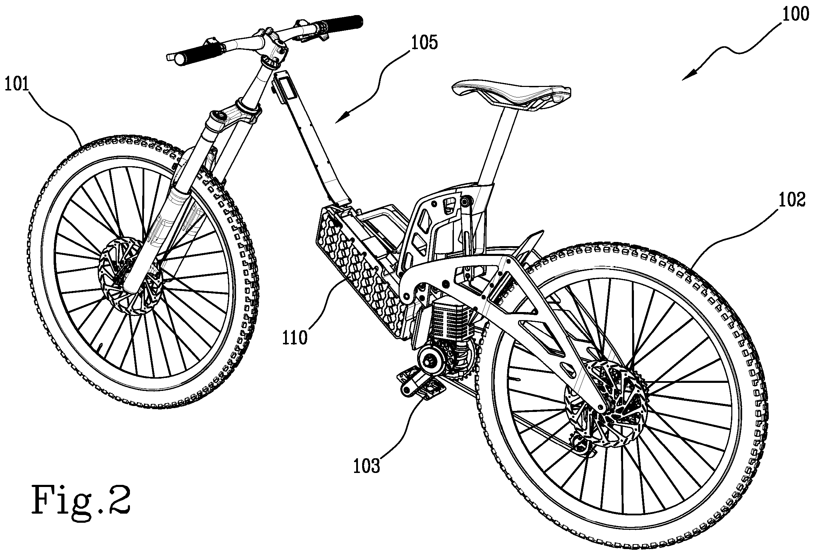

- figure 2 is a perspective side view of the pedal-assisted bicycle of figure 1;

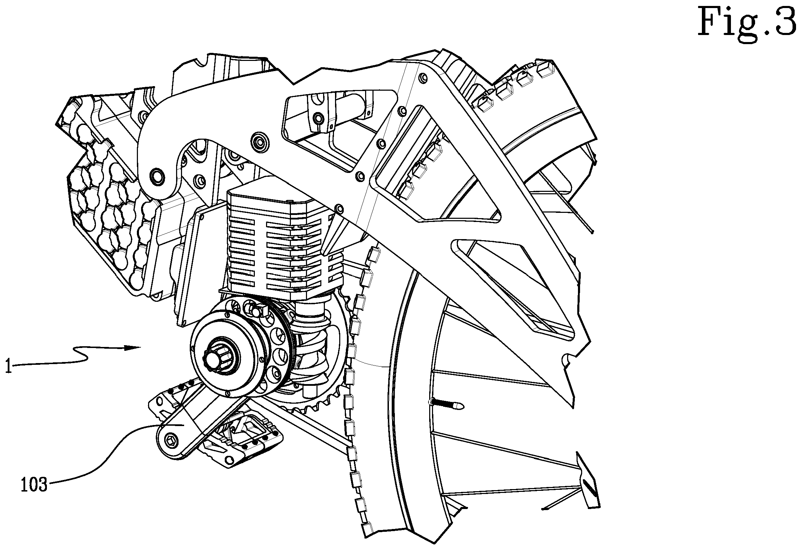

- figure 3 illustrates an enlarged detail of figure 2;

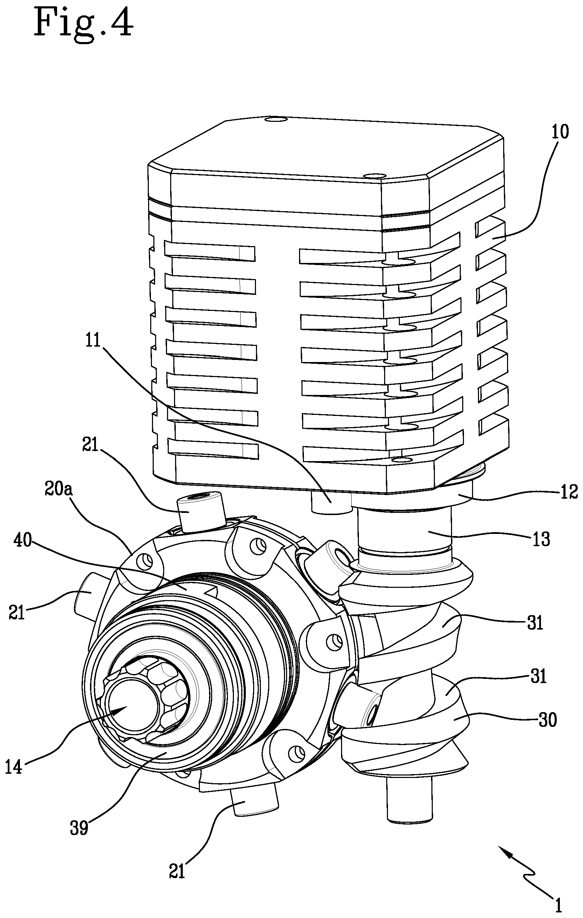

- figure 4 illustrates a side view of a first embodiment of the reducer according to the present invention;

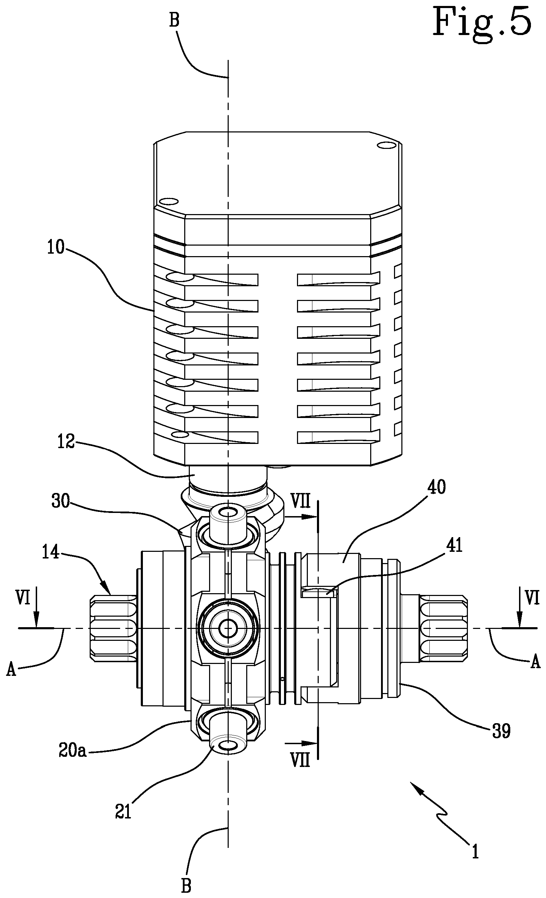

- figure 5 illustrates a front view of figure 4;

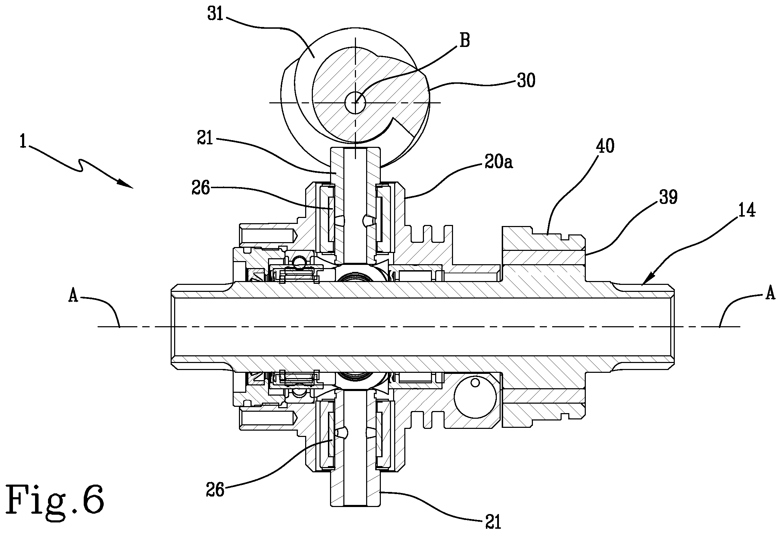

- figure 6 illustrates a section along the line VI-VI of figure 5;

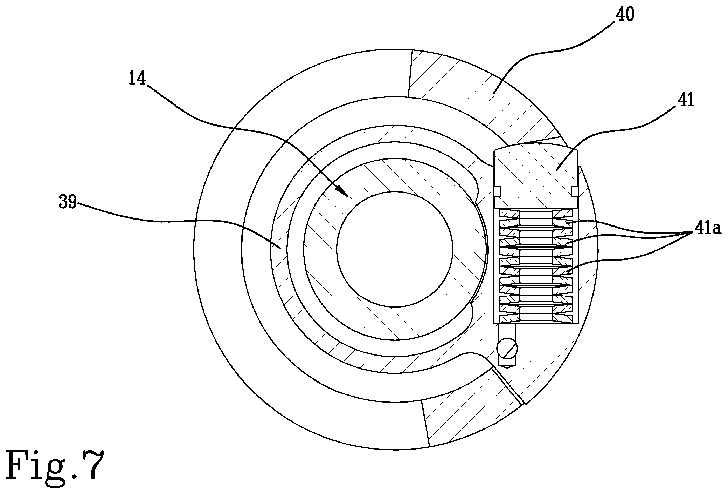

- figure 7 illustrates a section along the line VII-VII of figure 5, in which the torque sensor is visible;

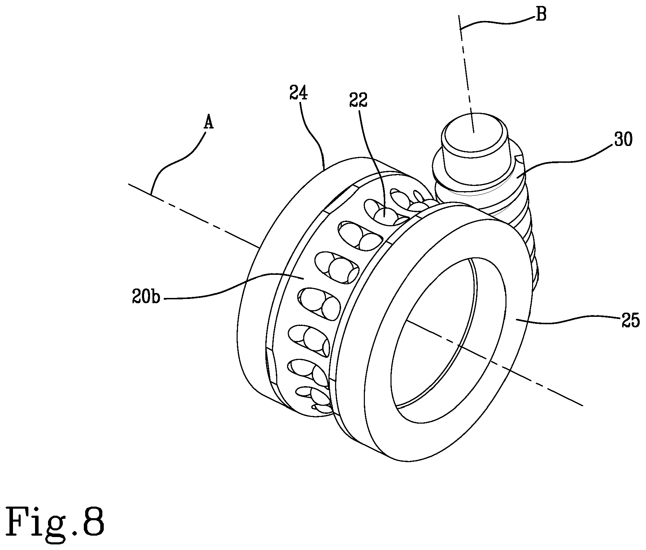

- figure 8 illustrates a side view of a second embodiment of the reducer according to the present invention;

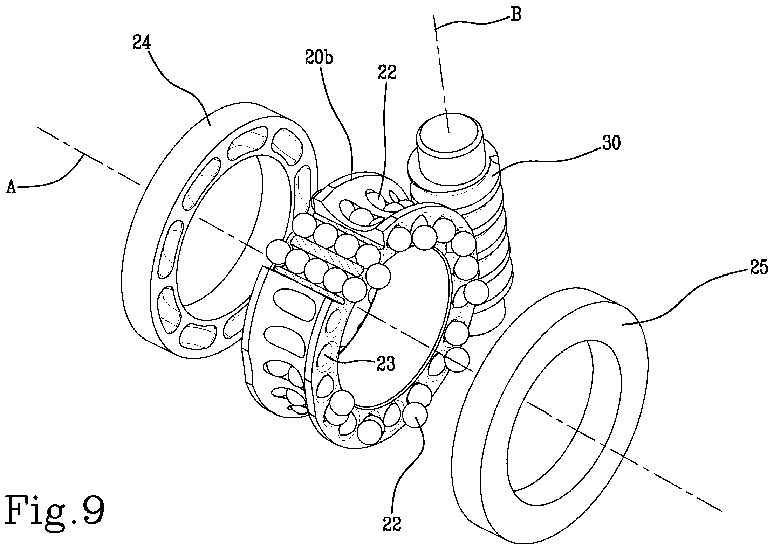

- figure 9 illustrates an exploded, partially sectional view of figure 8;

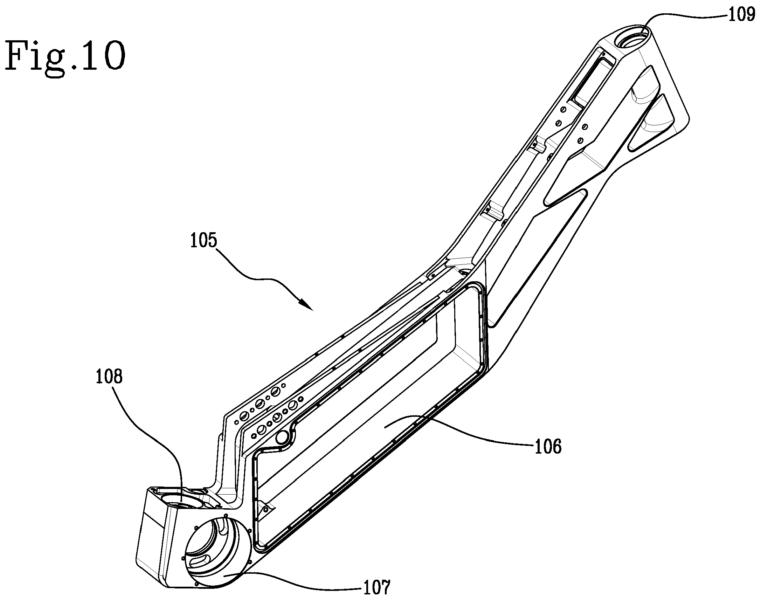

- figure 10 illustrates a monocoque body obtained with CNC machining of the bicycle frame shown in figures 1 and 2.

### Detailed description of the preferred embodiments of the invention

With reference to the appended figures, a reduction gear unit 1 or transmission member of a pedal-assisted bicycle 100 (hereinafter simply referred to as "electric bicycle 100") has been indicated by the reference number 1. The reduction gear unit 1 could be used on the primary shaft in any transmission system which envisages the transmission of torque between two shafts, for example electric, thermal, hydraulic, pneumatic motors, and the like.

In the preferred case of the bicycle 100, the primary shaft coincides with the shaft 14 on which the pedal cranks 103 (and consequently the pedals) of the bicycle 100 are mounted.

That is, the primary shaft extends between two opposite ends at which respective pedal cranks 103 are connected so as to generate a primary motion on said primary shaft 14 through the effort of a user (cyclist).

The shaft 14 is connected to a traction wheel of the bicycle 100 (usually the rear wheel) to transmit motion to the latter. Preferably, such transmission of motion occurs via a gear change system and via a chain 104.

At one end of the primary shaft 14, at least one crown 106 is connected (preferably keyed) for transmitting motion to the drive wheel 102 of the bicycle 100 (in the case of multiple crowns 106 they define precisely the gear change system).

The crown 106 of the bicycle 100 is constrained to a first end of the wheel 20a, 20b opposite the second end of the wheel 20a, 20b in which the coupling 40 is engaged.

In the preferred case of a pedal-assisted bicycle 100, the latter comprises an electric assistance motor 10 configured to generate an auxiliary motion and operationally connected to the primary shaft 14 to transmit the auxiliary motion to the primary shaft 14 itself. Preferably, the electric assistance motor 10 is geared directly or through intermediate stages on a wheel 20 of the primary shaft 14 to transmit the auxiliary motion to the latter.

In practice, the primary motion generated by the user is transmitted directly from the primary shaft 14, while the auxiliary motion is also transmitted by the electric motor 10 towards the primary shaft 14; the reduction gear unit 1 mechanically connects the primary shaft 14 with the shaft 11 of the electric motor.

**In a first embodiment**, the present invention describes a reducer assembly, particularly for a bicycle 100 comprising a frame 105, a drive wheel 101, 102, a pedal cranks/pedals assembly 103 and an electric motor 10. The pedal cranks/pedals assembly 103 comprises a pedal cranks shaft 14 that is movable with rotational motion around a predefined rotation axis A, and is solidly constrained to the pedal cranks/pedals assembly 103 to receive the torque dispensed by the cyclist via the pedal cranks/pedals assembly 103 and to transmit the torque to the drive wheel 101, 102.

The reduction gear unit 1 comprises a worm screw 30, solidly constrained to an output shaft 11 of the electric motor 10, configured to rotate around a rotation axis B, and a wheel 20a, 20b comprising a plurality of rolling elements 21, 22 operationally associated with the pedal cranks shaft 14, in which one or more of the rolling elements 21, 22 are engageable in one or more tracks 31 of the worm screw 30 such as to remain inside a guide and roll inside the channel 31 of the worm screw 30. The worm screw 30 and the wheel 20a, 20b are configured to receive the auxiliary torque dispensed by the electric motor 10 and to transmit said torque to the drive wheel 101, 102 via the pedal cranks shaft 14.

The wheel 20a, 20b is preferably arranged coaxially around the pedal cranks shaft 14.

The crown 106 of the bicycle 100 can be coupled on a first end of the wheel 20. The second axial end of the wheel 20 can be coupled, by interference, inside a coupling 40, for example, a cam with two or more teeth.

The use of a wheel 20a, 20b comprising a plurality of rolling elements 21, 22. With respect to the known type of toothed wheels, it allows to transform all the sliding friction into rolling friction with a considerable increase in efficiency, thus an increase in performance with the same power in input.

In a first non-limiting embodiment, the rolling elements 21, which couple on the screw 30, are a plurality of pins 21 directly engageable in one or more tracks 31 of the worm screw 30. The tracks are defined by the variable-geometry progressive helical projection (thread) provided along the side surface of the screw stem.

The pins 21 can have different embodiments. For example, they can be cylindrical or conical. The pins 21 have the feature of being able to rotate, rolling and pushing with their side surface tangentially within the thread of the profile of the screw 30, considerably reducing frictions. That is, each track 31 of the worm screw 30 is shaped so that it is always substantially parallel to the rotation axis of the pin 21.

The wheel 20a comprises on the side surface one or more housing seats, each of which is configured to rotatably house one end of a pin 21.

The housing seats are arranged circumferentially to each other, spaced radially with respect to the rotation axis of the wheel 20a.

Such a configuration allows to obtain a small and compact pin 21 and a rolling seat of the worm screw 30 which is equally narrow, as the encumbrance of the head of each pin 21 will be rather small.

The pins 21 are configured to be able to rotate, around their longitudinal axis, on bearings 26 or bushes housed in the seats of the wheel 20a.

Preferably, the worm screw 30 is configured to engage directly with two or more pins 21 simultaneously. This is possible by using, for example, a countersunk screw 30. It is thereby possible to constrain several pins 21 simultaneously on the screw 30, thereby dividing the load on each of them and further improving efficiency.

In a second non-limiting embodiment, the rolling elements are a plurality of balls 22 (i.e., a ball-circulating wheel 20b) present in transverse holes 23 of said wheel 20b having a tilt according to the pitch of the worm screw 30. In such a case, the ends of the wheel 20b are closable by two covers 24 and 25.

Preferably, the worm screw 30 is configured to engage directly with multiple pluralities of balls 22 simultaneously. This is possible by using, for example, a screw 30 with a rounded shape. It is thereby possible to constrain multiple pluralities of balls 21 simultaneously on the screw 30, thereby dividing the load on each of them and further improving efficiency. The seats for the pins 21 or the balls 22 are uniformly and circumferentially distributed around the rotation axis A of the wheel 20a, 20b.

The wheel 20b comprises housings, transverse holes tilted according to the pitch of the screw 30, where the balls 22 are inserted therein. The transverse holes "open" at the semicircular profile obtained on the external diameter of the wheel 20b to partially house the worm screw 30. The opening must not be wider than the diameter of the ball 22. It follows that the ball 22 remains in the guide and rolls inside the channel 30 and the various returns (tubes), like the balls of a bearing. The balls 22 by coupling with the screw 30 roll and push, forcing the wheel 20b to rotate on its rotation axis B.

This solution has the advantage of having high efficiency by virtue of the elimination of sliding friction.

By increasing the number of principles on the screw 30 and varying the number of seats for the balls on the wheel, various reductions are obtained.

Preferably, on one end of the worm screw 30, a first free wheel or unidirectional coupling 13 is inserted which is configured to be engaged by the shaft 11 of the electric motor 10 and to disengage from the motor shaft 11 if the pedalling of the cyclist exceeds the speed of the motor 10.

The motor shaft 11 can engage with a reducer or gear element 12, configured, for example, to provide a reduction of 1:4. The gear 12 is preferably made in two pieces, comprising a steel shaft and a plastic toothed wheel.

The reducer 12 is interposed between the motor shaft 11 and the first free wheel 13. The free wheel 13 is housed inside the worm screw 30.

If the motor 10 is in traction, the free wheel 13 is blocked and rotates the screw 30, but if the user pedals faster (as described above), it forces the pins to turn the screw 30, releasing/decoupling the free wheel 13 coaxial thereto.

Furthermore, the reduction gear unit 1 comprises a second free wheel 39 positioned on the pedal cranks shaft 14 and configured to permit free back pedalling and front pedalling, in which the pedal cranks shaft 14 and said second free wheel 39 become solidly constrained and transmit torque to the drive wheel 101, 102 of the bicycle 100. In such a case, the coupling 40 also becomes solidly constrained therewith.

That is, the free wheel mechanism 39 allows, for example, the backward movement of the pedals assembly 103 or possibly stopping pedalling without this interfering with the forward movement of the wheel and therefore of the bicycle itself during its motion.

The rotation axis B of the first free wheel 13 is orthogonal to the axis A of the second free wheel 39. Furthermore, the rotation axis B of the screw 30 is preferably perpendicular to the ground when the bicycle is in use. Preferably, the electric motor 10 is mounted so that its longitudinal axis and that of the output shaft 11 is parallel to the rotation axis B.

The reducer 1 described above can advantageously comprise a pedalling torque sensor configured to detect the torque applied by the cyclist to the pedals assembly 103 and to generate a signal representative thereof.

The torque sensor comprises a piston or movable element 41 (with straight motion) constrained on the second free wheel 39 and movable following the force impressed on the pedal cranks/pedals assembly 103, and a transducer configured to convert the movement of the piston 41 into a first electrical signal, whereby said electrical signal is proportionate to the force impressed on the pedal cranks/pedals assembly 103.

The piston 41 is arranged between the second free wheel 39 and the coupling 40 of the wheel 20a, 20b.

The wheel 20a, 20b has a housing perpendicular to the direction of rotation where the piston 41 held under pressure by the elastic means is housed.

The sealed chamber of the piston is connected to a pressure transducer which measures the internal pressure thereof. The piston is engaged on the cam with two or more teeth 40, holding the wheel 20a, 20b free.

An alternative embodiment to the use of the piston 41 includes the presence of sealed membranes or other system capable of generating a force/pressure.

The piston 41 is movable in contrast to a plurality of elastic means, for example, of Belleville washers 41a.

In particular, the elastic means is elastically deformable, arranged between the second free wheel 39 and the coupling 40 of the wheel 20a, 20b. The elastic means is movable with straight motion, by elastic deformation, between a rest position in maximum extension and a position of minimum extension (compression), as a function of the transmitted torque.

The stroke of the piston 41, coupled to the elastic means, between said two positions is a few millimetres.

Once the cyclist impresses a pressure on the cranks 103, thus on the pedal cranks shaft 14, the cam or coupling 40 impresses a force on the piston 41 which, by pressing proportionately to the force applied on the cranks, compresses the elastic elements sending a signal to the transducer, which through the control unit drives the electric motor 10.

The advantage of this device is that air or for example oil can be used to create a very simple closed circuit and with a large proportional/analog signal which is easy to read.

The system measures the torque on the cranks 103 in a hydraulic manner and then transfers the intercepted signal from a pressure transducer to the control unit and to the motor 10.

This allows to have a signal proportionate to the force impressed on the pedal since the force is counteracted by a package of Belleville washers positioned under the piston.

In the bicycle sector, "full suspended" mountain bikes are known, i.e., provided with rear suspension. The latter generates an excursion of the wheel with respect to the frame with undesirable effects on the transmission, in particular a pull of the chain during compression, such as when receiving a jump or upon impact with a bump. This generates a violent rotation of the pedals opposite that of advancement, which destabilizes the rider up to losing contact with his feet. From the mechanical point of view, the chain is highly stressed and could reach breaking. The effect is much more felt and harmful the greater the movement of the wheel with respect to the frame.

The presence of the torque sensor described above releases the pedal cranks shaft 14 from the crown 106, inserting an elastic element, the piston 41. Such a solution allows to reduce the chain pull, isolating the effects of the transmission on the rear suspension when necessary.

That is, the presence of the piston 41 and the elastic means allows to reduce or eliminate the backlash present in bicycles with high rear wheel excursion and also applicable to all types of bicycles with rear excursion. Furthermore, it allows to increase the current excursion limits of the rear wheel.

The invention releases the pedal cranks shaft with the crown by inserting an elastic element, the piston with springs (torque meter) customisable according to needs.

The compression force comes from the ground and, theoretically, is directed to the rear shock absorber. For various reasons, in reality a part of this force is first absorbed by the rider's body. The chain 104 is pulled, the pedal moves upwards, the foot is kicked: sometimes the rider manages to compensate better, sometimes worse. Sometimes the cyclist remains simply passive and receives this boost, while more experienced riders respond with continuous micro and macro-adjustments which occur mostly automatically.

Under certain conditions, for example on "brakes bumps", it is practically impossible to respond to the chain pull, especially if the rider uses flat pedals. With the elastic element inserted between the pedal cranks shaft 14 and the crown 106, few components of the compression force reach the feet.

**In a second embodiment,** the present invention describes a gearmotor unit comprising an electric motor 10 with a rotation shaft 11 and a reduction gear unit 1 as described above, in which the rotation shaft 11 is coupled with the worm screw 30.

The gearmotor unit comprises a processing unit operationally connected to the pedalling torque sensor and configured to send a signal to the electric motor 10 to turn the worm screw 30 in a manner which is proportionate to the first electrical signal.

**In a third embodiment,** the present invention describes a pedal-assisted bicycle 100 comprising a frame, a drive wheel 101, 102, a gearmotor unit as described above, and a battery 110 (rechargeable) capable of exchanging energy with the motor 10.

Advantageously, the rotation axis B of the worm screw 30 and of the output shaft 11 of the electric motor 10 are perpendicular to the ground on which the bicycle 100 rests during use by a cyclist.

The position of the electric motor 10 of the gearmotor is orthogonal to the rotation axis 14 of the pedal cranks, it is therefore in a vertical position with respect to the ground when in use.

Thereby the gearmotor is extremely compact. Furthermore, by virtue of its constructive feature, the Q factor (i.e., the measure of the maximum width of the two pedal cranks 103) is the smallest of all known motors (over 10mm). The narrower the Q factor (within certain limits), the more natural and non-fatiguing the pedalling.

Advantageously, the frame comprises an oblique monocoque tubular body 105. The monocoque frame according to the present invention incorporates the gearmotor with integrated batteries 110 without horizontal tube and low centre of gravity. Furthermore, it incorporates all the control and setting electronics, displaying the information on the touch display.

The batteries are easily accessible from the side.

The oblique monocoque tubular body 105 comprises a front steering tube or sleeve 109 for connecting to a front fork and to handlebars, a longitudinal housing (106) suitable for housing at least one battery 110, a first access/mouth 107 suitable for housing a substantially central portion of the pedal cranks shaft 14, a second access/mouth 108, perpendicular and connected to the first access 107, suitable for housing therein the motor shaft 11 and the reduction gear unit 1 such that the rotation axis B of the motor shaft 11 is orthogonal to the rotation axis A of the pedal cranks 103.

The access 107 is a through access, while the access 108 is open at the top but closed at the bottom (part towards the ground), so as to form a protected cavity or casing within which the pedal cranks shaft 14, the entire reducer mechanism 1, the pedalling torque sensor, the first and the second free wheel 13, 39, together with the respective additional components (bearings, spacer elements, etc.) are housed. That is, only the electric motor 10 of the gearmotor unit 1 is located outside the casing, while the respective output shaft 11 is at least partially inserted in such a casing to connect to the reducer mechanism 1.

Being separated from the electric motor 10, the reducer mechanism 1 is therefore far from heat sources generated by the electric motor 10 itself.

Furthermore, the fact that the worm screw 30 is positioned tangentially with respect to the wheel 20a, 20b as well as orthogonally with respect to the rotation axis A of the pedal cranks shaft 14 and orthogonally to the ground (when the bicycle 100 is in use), allows to position the electric motor 10 above the reducer and perpendicular to the ground.

Preferably, the second access 108 allows the insertion of the motor shaft 11 in a position substantially perpendicular to the ground when the bicycle 100 is in use.

The position of the reducer 1 and the electric motor 10 on the monocoque frame 105 determines a position of the battery pack 110 which is quite rearwards and translates downwards, thereby the centre of gravity of the bicycle is much lower than the competition, resulting in better ridability, manoeuvrability and better traction on all terrains.

Ultimately, the low centre of gravity also offers advantages on improving the braking space, avoiding the contact of the suspensions, thus simplifying the calibration of the latter.

Using the monocoque frame 105, thus "all in one", the internal components can be changed as necessary to offer a different configuration according to different riding needs.

During use of the bicycle comprising the gearmotor described herein, pedalling is started and a force is impressed on the cranks 103 and on the piston 41 where the second free wheel 39 is housed locked in the coupling 40, which is locked during pedalling but unlocked if the cranks 103 are to be rotated in reverse.

At this point, the coupling 40 is engaged on the wheel 20a, 20b and in turn impresses a force on the piston 41 which, being encased/housed in a closed circuit, sends a signal to a transducer/pressure switch.

At this point the signal from the transducer is sent to the motor 10 which proportionally starts to turn the screw 30. Everything is rotated (pedal cranks shaft 12, coupling 40 and wheel 20a, 20b) and the assisted pedalling begins.

By law, the bicycle 100 cannot do more than 25km/h, thus, when assisted pedalling is activated, if further pedalling is done, the motor 10 would stop giving assistance, but if going further was desired, the piston 41 would be sent to the end-stroke and the faces of the second wheel 39 and the coupling 40 would be put in contact, dragging by force and making the pins (purple) slide on the screw 30, which in turn would be released by virtue of the presence of the first free wheel 13 coaxial thereto, therefore the motor 10 and the reduction 12 would remain stationary, in practice they are not "dragged behind".

The bicycle 100 further comprises one or more batteries 110 connected to the electric motor 10 so as to be able to exchange energy with the latter. In particular, the batteries 110 can be recharged by the electric motor 10, when it acts as a generator (energy recovery condition), and can provide power to the electric motor 10 when it provides pedalling assistance (enslaved condition), i.e., when it acts as a motor. The batteries 110 can be separated from the motor 10 or, according to an alternative configuration of the "all-in-one" type, can be housed inside a common closing body integrally constrained to the wheel 10 together with the electric motor 10.

The bicycle 100 is provided with an adaptive control unit, which controls the electric motor 10 to assist the cyclist in the assisted pedalling. In particular, the control unit is configured to provide a reference control signal of the motor, in particular a current signal, on which the driving or resistant torque of the motor depends.

## Claims

1. Reduction gear unit (1) for a bicycle (100) comprising a frame (105), a drive wheel (101, 102), a pedal cranks/pedals assembly (103) and an electric motor (10),
- said pedal cranks/pedals assembly (103) comprising a pedal cranks shaft (14) that is movable with rotational motion around a predefined axis (A), said pedal cranks shaft (14) being solidly constrained to the pedal cranks/pedals assembly (103) to receive the torque dispensed by the cyclist via said pedal cranks/pedals assembly (103) and to transmit said torque to said drive wheel (101, 102), the reduction gear unit (1) comprising:
- a worm screw (30), configured to be solidly constrained to an output shaft (11) of the electric motor (10), to rotate around a rotation axis (B); and
- a wheel (20a, 20b) comprising a plurality of rolling elements (21, 22), configured to be operationally associated with the pedal cranks shaft (14), in which one or more of said rolling elements (21, 22) are engageable in one or more tracks (31) of said worm screw (30) such as to remain inside a guide and roll inside the channel (31) of the worm screw (30), said worm screw (30) and said wheel (20a, 20b) being configured to receive the torque dispensed by said electric motor (10) and to transmit said torque to said drive wheel (101, 102) via said pedal cranks shaft (14),
**characterised in that** the reduction gear unit (1) further comprises
- a second free wheel (39) configured to be positioned on the pedal cranks shaft (14) and to permit free back pedalling and front pedalling, in which the pedal cranks shaft (14) and said second free wheel (39) become solidly constrained and transmit torque to the drive wheel (101, 102) of the bicycle (100);
- a pedalling torque sensor configured to detect the torque applied by the cyclist to the pedal assembly (103) and to generate a signal that is representative of the torque, said torque sensor comprising:
- a piston (41) constrained on said second free wheel (39) and movable following the force imposed on the pedal cranks/pedals assembly (103); and
- a transducer configured to convert the movement of the piston (41) into a first electric signal so that said electrical signal is proportionate to the force impressed on the pedal cranks/pedals assembly (103).

2. Reduction gear unit (1) according to claim 1, wherein said rolling elements (21, 22) are a plurality of rotating pins (21) that are directly engageable in said one or more tracks (31) of said worm screw (30).

3. Reduction gear unit (1) according to claim 2, wherein said wheel (20a) comprises on the side surface one or more seats configured to rotatably house one end of said pins (21).

4. Reduction gear unit (1) according to claim 2 or 3, wherein the worm screw (30) is configured to engage with two or more pins (21) simultaneously.

5. Reduction gear unit (1) according to claim 1, wherein said rolling elements (21, 22) are a plurality of balls (22) located in transverse holes (23) of said wheel (20b) that have a tilt according to the pitch of the worm screw (30).

6. Reduction gear unit (1) according to one or more of claims 2 to 5, wherein said seats for said pins (21) or said balls (22) are circumferentially distributed around the rotation axis (A) of the wheel (20a, 20b).

7. Reduction gear unit (1) according to one or more of the preceding claims, wherein on said worm screw (30) a first free wheel (13) is inserted that is configured to be engaged by the shaft (11) of the electric motor (10) and to disengage from the motor shaft (11) if the pedalling of the cyclist exceeds the speed of the motor (10).

8. Reduction gear unit Reduction gear unit (1) according to claim 1, wherein the rotation axis (B) of said first free wheel (13) is orthogonal to the axis (A) of said second free wheel (39).

9. Reduction gear unit (1) according to claim 1, wherein said piston (41) is movable to contrast a plurality of Belleville washers (41a).

10. Gearmotor unit comprising:
- an electric motor (10) with a rotation shaft (11);
- a reduction gear unit (1) according to one or more of the preceding claims, wherein said rotation shaft (11) is coupled with the worm screw (30).

11. Gearmotor unit according to claim 10, comprising a processing unit operationally connected to said pedalling torque sensor and configured to send a signal to the electric motor (10) to turn the worm screw (30) in a manner that is proportionate to said first electric signal.

12. Bicycle (100) comprising a frame, a drive wheel (101, 102), a gearmotor unit according to claim 11, and a battery (110) that is able to exchange energy with the motor (102).

13. Bicycle (100) according to claim 12, wherein the rotation axis (B) of the worm screw (30) and of the output shaft (11) of said electric motor (10) are perpendicular to the ground on which the bicycle (100) rests during use.

14. Bicycle (100) according to claim 12 or 13, wherein said frame comprises an oblique monocoque tubular body (105) defining:
- a front steering tube (109) for connecting to a front fork and to handlebars;
- a longitudinal housing (106) suitable for housing said battery (110);
- a first mouth (107) suitable for inserting the pedal cranks shaft (14);
- a second access/mouth (108), perpendicular and connected to said first mouth (107), suitable for housing the reduction gear unit (1) and the motor shaft (11) such that said rotation axis (B) of the motor shaft (11) is orthogonal to the rotation axis (A) of the pedal cranks (103) and in a position that is substantially perpendicular to the ground when the bicycle is in use.

## Patentansprüche

1. Untersetzungsgetriebe (1) für ein Fahrrad (100) mit einem Rahmen (105), einem Antriebsrad (101, 102), einer Tretkurbeln/Pedale-Anordnung (103) und einem Elektromotor (10),
- wobei die Tretkurbeln/Pedale-Anordnung (103) eine Tretkurbeln-Welle (14) umfasst, die mit einer Drehbewegung um eine vordefinierte Achse (A) beweglich ist, wobei die Tretkurbeln-Welle (14) fest an die Tretkurbeln/Pedale-Anordnung (103) gebunden ist, um das vom Radfahrer über die Tretkurbeln/Pedale-Anordnung (103) abgegebene Drehmoment aufzunehmen und das Drehmoment auf das Antriebsrad (101, 102) zu übertragen,
wobei das Untersetzungsgetriebe (1) Folgendes umfasst:
- eine Schneckenschraube (30), die konfiguriert ist, um fest mit einer Abtriebswelle (11) des Elektromotors (10) gebunden zu werden, um sich um eine Drehachse (B) zu drehen; und
- ein Rad (20a, 206), das eine Vielzahl von Wälzkörpern (21, 22) umfasst, die so konfiguriert sind, dass sie mit der Tretkurbeln-Welle (14) funktionell assoziiert sind, wobei ein oder mehrere der Wälzkörper (21, 22) in eine oder mehrere Laufbahnen (31) der Schneckenschraube (30) eingreifen können, um innerhalb einer Führung zu bleiben und innerhalb des Kanals (31) der Schneckenschraube (30) zu rollen, wobei die Schneckenschraube (30) und das Rad (20a, 206) konfiguriert sind, um das von dem Elektromotor (10) abgegebene Drehmoment aufzunehmen und das Drehmoment über die Tretkurbeln-Welle (14) auf das Antriebsrad (101, 102) zu übertragen,
**dadurch gekennzeichnet, dass** das Untersetzungsgetriebe (1) ferner umfasst
- ein zweites Freilaufrad (39), das so konfiguriert ist, dass es auf der Tretkurbeln-Welle (14) positioniert werden kann und ein freies Treten nach hinten und nach vorne ermöglicht, wobei die Tretkurbeln-Welle (14) und das zweite Freilaufrad (39) fest miteinander gebunden werden und ein Drehmoment auf das Antriebsrad (101, 102) des Fahrrads (100) übertragen;
- einen Pedaldrehmomentsensor, der so konfiguriert ist, dass er das vom Radfahrer auf die Pedalanordnung (103) aufgebrachte Drehmoment erfasst und ein Signal erzeugt, das für das Drehmoment repräsentativ ist, wobei der Drehmomentsensor umfasst:
- einen Kolben (41), der auf dem zweiten Freilaufrad (39) gebunden und nach der auf die Tretkurbeln/Pedale-Anordnung (103) ausgeübten Kraft beweglich ist; und
- einen Wandler, der dazu konfiguriert ist, die Bewegung des Kolbens (41) in ein erstes elektrisches Signal umzuwandeln, so dass das elektrische Signal proportional zu der Kraft ist, die auf die Tretkurbeln/Pedale-Anordnung (103) ausgeübt wird.

2. Untersetzungsgetriebe (1) nach Anspruch 1, wobei es sich bei den Wälzkörpern (21, 22) um eine Vielzahl von Drehzapfen (21) handelt, die direkt in die eine oder die mehreren Laufbahnen (31) der Schneckenschraube (30) eingreifen können.

3. Untersetzungsgetriebe (1) nach Anspruch 2, wobei das Rad (20a) an der Seitenfläche einen oder mehrere Sitze umfasst, die dazu konfiguriert sind, ein Ende der Zapfen (21) drehbar aufzunehmen.

4. Untersetzungsgetriebe (1) nach Anspruch 2 oder 3, wobei die Schneckenschraube (30) konfiguriert ist, um mit zwei oder mehr Zapfen (21) gleichzeitig in Eingriff zu treten.

5. Untersetzungsgetriebe (1) nach Anspruch 1, wobei die Wälzkörper (21, 22) eine Vielzahl von Kugeln (22) sind, die in Querlöchern (23) des Rades (206) angeordnet sind und eine Neigung entsprechend der Steigung der Schneckenschraube (30) aufweisen.

6. Untersetzungsgetriebe (1) nach einem oder mehreren der Ansprüche 2 bis 5, wobei die Sitze für die Zapfen (21) oder die Kugeln (22) umfangsmäßig um die Drehachse (A) des Rades (20a, 206) verteilt sind.

7. Untersetzungsgetriebe (1) nach einem oder mehreren der vorhergehenden Ansprüche, wobei auf der Schneckenschraube (30) ein erstes Freilaufrad (13) eingesetzt ist, das konfiguriert ist, um von der Welle (11) des Elektromotors (10) in Eingriff genommen zu werden und sich von der Motorwelle (11) zu lösen, wenn das Treten des Fahrradfahrers die Drehzahl des Motors (10) übersteigt.

8. Untersetzungsgetriebe (1) nach Anspruch 1, wobei die Drehachse (B) des ersten Freilaufrads (13) orthogonal zur Achse (A) des zweiten Freilaufrads (39) verläuft.

9. Untersetzungsgetriebe (1) nach Anspruch 1, wobei der Kolben (41) beweglich ist, um einer Vielzahl von Tellerfedern (41a) entgegenzuwirken.

10. Getriebemotoreinheit, umfassend:
- einen Elektromotor (10) mit einer Drehwelle (11);
- ein Untersetzungsgetriebe (1) nach einem oder mehreren der vorhergehenden Ansprüche, wobei die Drehwelle (11) mit der Schneckenschraube (30) gekoppelt ist.

11. Getriebemotoreinheit nach Anspruch 10, die eine Verarbeitungseinheit umfasst, die betriebswirksam mit dem Pedaldrehmomentsensor verbunden und so konfiguriert ist, dass sie ein Signal an den Elektromotor (10) sendet, um die Schneckenschraube (30) in einer Weise zu drehen, die proportional zu dem ersten elektrischen Signal ist.

12. Fahrrad (100) mit einem Rahmen, einem Antriebsrad (101, 102), einer Getriebemotoreinheit nach Anspruch 11 und einer Batterie (110), die in der Lage ist, Energie mit dem Motor (102) auszutauschen.

13. Fahrrad (100) nach Anspruch 12, wobei die Drehachse (B) der Schneckenschraube (30) und der Abtriebswelle (11) des Elektromotors (10) senkrecht zu dem Boden sind, auf dem das Fahrrad (100) während des Gebrauchs ruht.

14. Fahrrad (100) nach Anspruch 12 oder 13, wobei der Rahmen einen schrägen, einteiligen, rohrförmigen Körper (105) umfasst, der Folgendes definiert:
- ein vorderes Lenkrohr (109) zur Verbindung mit einer Vorderradgabel und einem Lenker;
- ein Längsgehäuse (106), das zur Aufnahme der Batterie (110) geeignet ist;
- eine erste Öffnung (107), die zum Einführen der Tretkurbeln-Welle (14) geeignet ist;
- einen zweiten Zugang/eine zweite Mündung (108), der/die senkrecht zu und mit der ersten Mündung (107) verbunden ist und geeignet ist, das Untersetzungsgetriebe (1) und die Motorwelle (11) so aufzunehmen, dass die Drehachse (B) der Motorwelle (11) orthogonal zur Drehachse (A) der Tretkurbeln (103) und in einer Position ist, die im Wesentlichen senkrecht zum Boden ist, wenn das Fahrrad in Gebrauch ist.

## Revendications

1. Ensemble engrenage de réduction (1) destiné à une bicyclette (100) comprenant un cadre (105), une roue motrice (101, 102), un ensemble manivelles de pédalier/pédales (103) et un moteur électrique (10),
- ledit ensemble manivelles de pédalier/pédales (103) comprenant un arbre (14) des manivelles de pédalier étant mobile en rotation autour d'un axe prédéfini (A), ledit arbre (14) des manivelles de pédalier étant solidement contraint à l'ensemble manivelles de pédalier/pédales (103) pour recevoir le couple fourni par le cycliste via ledit ensemble manivelles de pédalier/pédales (103) et pour transmettre ledit couple à ladite roue motrice (101, 102),
l'ensemble engrenage de réduction (1) comprenant :
- une vis sans fin (30), configurée pour être solidement contrainte à un arbre de sortie (11) du moteur électrique (10), pour tourner autour d'un axe de rotation (B) ; et
- une roue (20a, 206) comprenant une pluralité d'éléments de roulement (21, 22), configurée pour être associée de manière fonctionnelle à l'arbre (14) des manivelles de pédalier,
dans lequel un ou plusieurs desdits éléments de roulement (21, 22) peuvent se mettre en prise avec un ou plusieurs canaux (31) de ladite vis sans fin (30) de manière à rester à l'intérieur d'un guide et à rouler à l'intérieur du canal (31) de la vis sans fin (30), ladite vis sans fin (30) et ladite roue (20a, 206) étant configurées pour recevoir le couple délivré par ledit moteur électrique (10) et pour transmettre ledit couple à ladite roue motrice (101, 102) par l'intermédiaire dudit arbre (14) des manivelles de pédalier, **caractérisé en ce que** l'ensemble engrenage de réduction (1) comprend en outre
- une seconde roue libre (39) configurée pour être positionnée sur l'arbre (14) des manivelles de pédalier et pour permettre un pédalage arrière et un pédalage avant libres, dans lesquels l'arbre (14) des manivelles de pédalier et ladite seconde roue libre (39) deviennent solidement contraints et transmettent un couple à la roue motrice (101, 102) de la bicyclette (100) ;
- un capteur de couple de pédalage configuré pour détecter le couple appliqué par le cycliste à l'ensemble pédale (103) et pour générer un signal étant représentatif du couple, ledit capteur de couple comprenant :
- un piston (41) contraint sur ladite seconde roue libre (39) et mobile en fonction de la force imposée à l'ensemble manivelles de pédalier/pédales (103) ; et
- un transducteur configuré pour convertir le mouvement du piston (41) en un premier signal électrique de sorte que ledit signal électrique soit proportionnel à la force exercée sur l'ensemble manivelles de pédalier/pédales (103).

2. Ensemble engrenage de réduction (1) selon la revendication 1, lesdits éléments de roulement (21, 22) étant une pluralité de goupilles rotatives (21) pouvant directement se mettre en prise avec lesdites une ou plusieurs pistes (31) de ladite vis sans fin (30).

3. Ensemble engrenage de réduction (1) selon la revendication 2, ladite roue (20a) comprenant sur la surface latérale un ou plusieurs sièges configurés pour loger de manière rotative une extrémité desdites goupilles (21).

4. Ensemble engrenage de réduction (1) selon la revendication 2 ou 3, la vis sans fin (30) étant configurée pour se mettre en prise simultanément avec deux ou plusieurs goupilles (21).

5. Ensemble engrenage de réduction (1) selon la revendication 1, lesdits éléments de roulement (21, 22) étant une pluralité de billes (22) situées dans des trous transversaux (23) de ladite roue (206) qui ont une inclinaison selon le pas de la vis sans fin (30).

6. Ensemble engrenage de réduction (1) selon l'une ou plusieurs des revendications 2 à 5, les sièges desdits axes (21) ou desdites billes (22) étant répartis de manière circonférentielle autour de l'axe de rotation (A) de la roue (20a, 206).

7. Ensemble engrenage de réduction (1) selon l'une ou plusieurs des revendications précédentes, où sur ladite vis sans fin (30) est insérée une première roue libre (13) étant configurée pour se mettre en prise avec l'arbre (11) du moteur électrique (10) et pour se désengager de l'arbre moteur (11) si le pédalage du cycliste dépasse la vitesse du moteur (10).

8. Ensemble engrenage de réduction (1) selon la revendication 1, l'axe de rotation (B) de ladite première roue libre (13) étant orthogonal à l'axe (A) de ladite seconde roue libre (39).

9. Ensemble engrenage de réduction (1) selon la revendication 1, ledit piston (41) étant mobile pour s'opposer à une pluralité de rondelles Belleville (41a).

10. Ensemble moteur à engrenages comprenant :
- un moteur électrique (10) doté d'un arbre de rotation (11) ;
- un ensemble engrenage de réduction (1) selon l'une ou plusieurs des revendications précédentes, ledit arbre de rotation (11) étant couplé à la vis sans fin (30).

11. Ensemble moteur à engrenages selon la revendication 10, comprenant une unité de traitement reliée de manière fonctionnelle audit capteur de couple de pédalage et configurée pour envoyer un signal au moteur électrique (10) afin de faire tourner la vis sans fin (30) d'une manière proportionnelle audit premier signal électrique.

12. Bicyclette (100) comprenant un cadre, une roue motrice (101, 102), un ensemble moteur à engrenages selon la revendication 11, et une batterie (110) capable d'échanger de l'énergie avec le moteur (102).

13. Bicyclette (100) selon la revendication 12, l'axe de rotation (B) de la vis sans fin (30) et de l'arbre de sortie (11) dudit moteur électrique (10) étant perpendiculaires au sol sur lequel repose la bicyclette (100) lors de son utilisation.

14. Bicyclette (100) selon la revendication 12 ou 13, ledit cadre comprenant un corps tubulaire monocoque oblique (105) définissant :
- un tube de direction avant (109) destiné à être relié à une fourche avant et à un guidon;
- un logement longitudinal (106) adapté au logement de ladite batterie (110) ;
- une première embouchure (107) apte à insérer l'arbre (14) des manivelles de pédalier;
- un second accès / une seconde embouchure (108), perpendiculaire et relié(e) à ladite première embouchure (107), apte à loger l'ensemble engrenage de réduction (1) et l'arbre moteur (11) de telle sorte que ledit axe de rotation (B) de l'arbre moteur (11) soit orthogonal à l'axe de rotation (A) des manivelles de pédalier (103) et dans une position étant sensiblement perpendiculaire au sol lorsque la bicyclette est en service.
